# EUROPEAN PATENT SPECIFICATION

(11) **EP 3 598 596 B1**
(45) Date of publication and mention of the grant of the patent: **10.03.2021**
(21) Application number: 19305005.1
(22) Date of filing: 03.01.2019
(51) Int. Cl.: H02G 15/06, G01K 1/02, G01K 1/14, H01R 13/53, H01R 13/66, H02B 7/06

(54) **TEMPERATURE SENSOR FOR A CABLE HEAD FOR A RING MAIN UNIT**
TEMPERATURFÜHLER FÜR EINEN KABELKOPF EINER RINGLEITUNGSEINHEIT
CAPTEUR DE TEMPÉRATURE POUR UNE TÊTE DE CÂBLE POUR UNITÉ DE RÉSEAU ÉLECTRIQUE EN BOUCLE

(30) Priority: 20.07.2018 CN 201821162443 U
(43) Date of publication of application: 22.01.2020
(73) Proprietor: Schneider Electric Industries SAS, 92500 Rueil Malmaison (FR)
(72) Inventor: LIU, Ji, Pudong, Shanghai 201203 (CN); HU, Xiaobin, Pudong, Shanghai 201203 (CN); CHEN, Guangyu, Pudong, Shanghai 201203 (CN)
(74) Representative: Manitz Finsterwald Patent- und Rechtsanwaltspartnerschaft mbB

(56) References cited:
- CN-A- 106 207 940
- CN-A- 106 595 899
- CN-U- 203 848 955
- CN-U- 204 333 739

## Description

### TECHNICAL FIELD

The application relates to a cable head for a ring main unit in accordance with the preamble of claim 1 (CN 106207940 A) and a ring main unit comprising such a cable head. Similar cable heads are disclosed in CN 20433739 U, CN 203848955 U and CN 106595899 A.

### BACKGROUND

Ring main unit is used for power supplying in net-loop in distribution network. The Ring main unit has good economic efficiency and high reliability. The operating condition of the ring main unit is a critical factor for measuring the power supplying quality. The ring main unit gathers and divides cable lines. In cable lines, a problem may be often occurred at a cable head in the ring main unit. If the temperature at the cable head in the ring main unit is too high, there may be failure in the cable lines or the equipment may be damaged, etc. If an effective temperature measuring means specifically for measuring the temperature of the cable head can be implemented, an accident that caused by the overhigh temperature of the cable lines can be avoided, thus decreasing the failure of the ring main unit and improving the reliability.

The temperature measuring means is mostly for air ring main unit and has a variety of drawbacks, such as long response, large errors, a need for external power supply and a need for varying the construction technology of the cable head. There is no reliable temperature measuring means for inflatable ring main unit. Thereby, there is a need for a wireless temperature measuring solution for inflatable ring main unit.

### SUMMARY

The present application provides a cable head for a ring main unit in accordance with claim 1..

A thread insert is provided between the bolt assembly and the plug cover to equalize electric field.

The thread insert is inserted into the plug cover and there is adjustable spacing between an end of the thread insert and an end of the plug cover to achieve the output of the temperature signal.

Preferably, a recess is provided on an outer surface of the nut to contain the temperature measuring element.

Preferably, the wireless transmission is radio frequency identification.

Preferably, the cable head further comprises a shield contacting with the metal terminal to shield electric field.

Preferably, the metal terminal is a copper terminal.

The present application also provides a ring main unit comprises the cable head as described above.

### BRIEF DESCRIPTION OF THE DRAWINGS

Fig. 1 is a schematic sectional view of the cable head in accordance with the present application.
Fig. 2 is partial enlarged detail of Fig. 1.
Fig. 3 is a schematic view of the temperature measuring solution in accordance with the present application.
Fig. 4 is a schematic view of the temperature measuring element disposed in a nut.

### DETAILED DESCRIPTION

Various exemplary embodiments of the present application will be described below with reference to the accompanying drawings. The foregoing and other technical contents, features, and effects of the present application will be clearly apparent from the following detailed description of the embodiments with reference to the attached drawings. Directional terms mentioned in the following embodiments, such as: up, down, left, right, front, back, etc., are simply directions with reference to the drawings. Therefore, the directional terms are used to illustrate and not to limit the present application. In addition, in all the embodiments, same reference numbers denote same elements.

The drawings of the description show the shape and relationship of the various components. Note that, the drawings are illustrative and used to describe the concept of the present application.

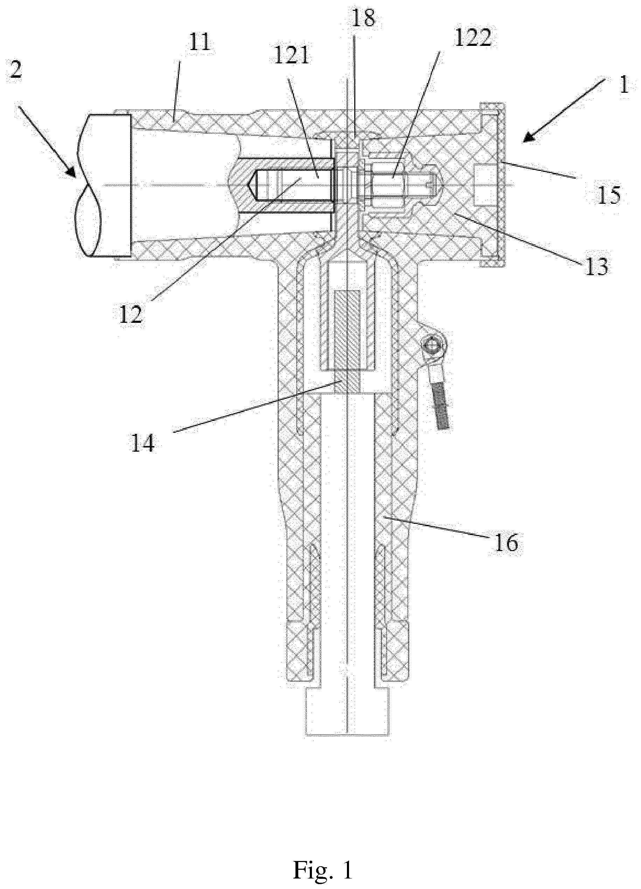

Hereafter, a preferred embodiment of the present application will be described with reference to Fig. 1 to Fig. 4.

Firstly, Fig. 1 illustrates a sectional view of the cable head 1 of the present application. The cable head 1 comprises a plug body 11. When the cable head is assembled to a bushing of the ring main unit, a bolt assembly 12 and a plug cover 13 are within the plug body 11. Specifically, the bolt assembly 12 comprises a bolt 121 and a nut 122. The bolt is inserted into the bushing and the bushing contains a portion of the bolt 121. The plug cover 13 is mounted to the nut at one side and a plug cap 15 is mounted to the plug cover 13 at the other side to close the plug cover 13.

The bolt and the nut are fixed with a metal terminal (preferably a copper terminal) 14 and the metal terminal is contacted with the bushing. A stress solid 16 surrounds the wiring of the metal terminal to disperse the stress.

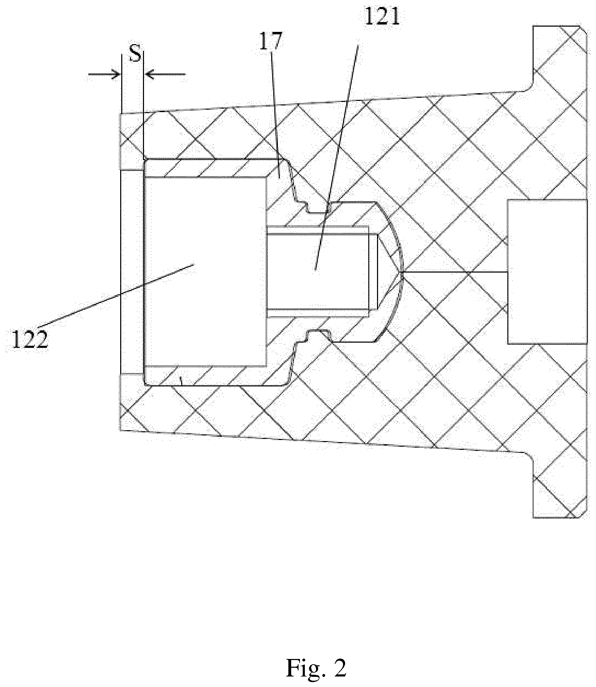

Referring to Fig.2, a thread insert 17 is provided between the bolt assembly 12 and the plug cover 13 to shield electric field and further equalize electric field. In addition, a shield 18 is provided above the metal terminal to also shield electric filed.

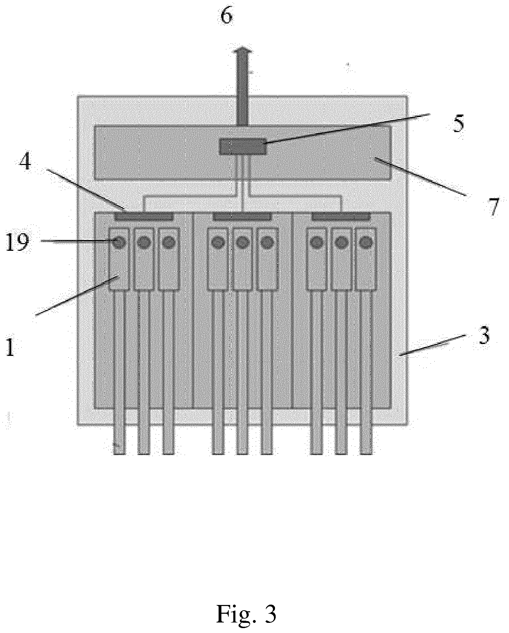

Fig. 3 illustrates the temperature measuring solution in accordance with the present application. As shown in Fig. 3, the cable head 1 is connected with the ring main unit 3, and a temperature signal measured by the temperature measuring element 19 of the cable head is transmitted to a temperature collector 5 in a control room 7 via acquisition antennas 4 and is further transmitted to a data center 6. It is understood that the temperature signal is transmitted by wireless transmission technology (such as radio frequency identification). Thereby, by the use of the radio frequency identification, an external power supply is omitted and the power consumption is decreased. Furthermore, the anti-interference ability is strong and the requirement for measuring temperature at a plurality of positions is satisfied. The radio frequency identification is a well-known technology and the detail is omitted.

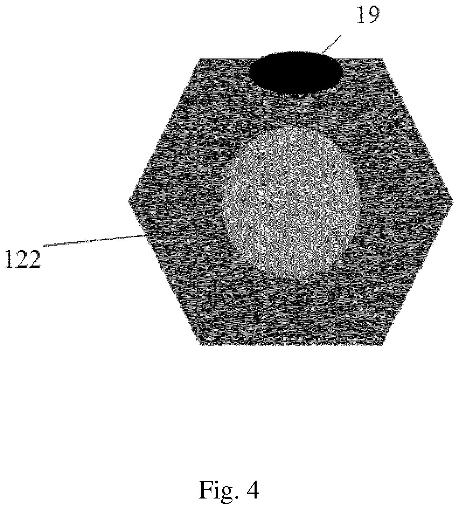

Fig. 4 illustrates the temperature measuring element 19 inserted into the nut. As shown in Fig. 4, a recess is provided on a surface of the nut 122 and the temperature measuring element 19 is provided in the recess and is sealed by a seal (such as epoxy resin).

In the present application, the thread insert 17 is inserted into the plug cover 13. As shown in Fig. 2, there is a spacing S (such as 3mm) between an end of the thread insert and an end of the plug cover, so as to output the temperature signal via radio frequency identification. It should be noted that the spacing is adjustable to output the temperature signal in different cases. For example, after the thread insert 17 is inserted into the plug cover 13, the spacing S is 3mm (or more) deeper than the case that there is no temperature measuring element in the cable head.

The cable head of the present application can quickly and precisely measure the temperature at the connection between the cable head and the bushing of the ring main unit so as to decrease the occurrence of failure of the ring main unit and improve the reliability of power supplying. Further, the cable head of the present application incorporates the temperature measuring function and the communication function, and thereby reduce the number of components and is suitable for various ring main units.

It should be noted that the described embodiments are merely exemplary and are not intended to limit the invention, and that the features of the various embodiments may be used in combination to obtain further embodiments of the present invention. The scope is only limited by the appended claims. Many variations and modifications of the described embodiments are possible without departing from the scope of the invention as defined by the appended claims.

## Claims

1. A cable head (1) for a ring main unit, comprising a plug body (11); a bolt assembly (12) comprising a bolt (121) and a nut (122), wherein when the cable head (1) is assembled to a bushing of the ring main unit, the bolt (121) is inserted into the bushing and the bushing contains a portion of the bolt (121); a plug cover (13) mounted on the nut (122) at one side; a plug cap (15) mounted on the plug cover at its other side to close the plug cover (13); a metal terminal (14) fixed with the bolt assembly (12) and configured to contact with the bushing; a stress solid (16), and a temperature measuring element (19) to sense the temperature at the connection between the cable head and the bushing and transmit the measured temperature signal to a collector (5) via wireless transmission, **characterized in that**
the temperature measuring element (19) is inserted into the nut (122),
a thread insert (17) is provided between the bolt assembly (12) and the plug cover (13) to equalize electric field, and
the thread insert (17) is inserted into the plug cover (13) and there is spacing (S) between an end of the thread insert (17) and an end of the plug cover (13) to achieve the output of the temperature signal.

2. The cable head according to claim 1, **characterized in that** a recess is provided on an outer surface of the nut (122) to contain the temperature measuring element (19).

3. The cable head according to claim 1, **characterized in that** the wireless transmission is radio frequency identification.

4. The cable head according to claim 1, **characterized in that** the cable head (1) further comprises a shield (18) contacting with the metal terminal (14) to shield electric field.

5. The cable head according to claim 1, **characterized in that** the metal terminal (14) is a copper terminal.

6. A ring main unit comprising the cable head according to any one of claims 1 to 5.

## Patentansprüche

1. Kabelkopf (1) für eine Ringleitungseinheit, umfassend einen Steckerkörper (11); eine Bolzenanordnung (12) mit einem Bolzen (121) und einer Mutter (122), wobei, wenn der Kabelkopf (1) an einer Buchse der Ringleitungseinheit montiert wird, der Bolzen (121) in die Buchse eingeführt wird und die Buchse einen Teil des Bolzens (121) enthält; eine Steckerabdeckung (13), die an einer Seite an der Mutter (122) montiert ist; eine Steckerkappe (15), die an der Steckerabdeckung an ihrer anderen Seite montiert ist, um die Steckerabdeckung (13) zu verschließen; einen Metallanschluss (14), der an der Bolzenanordnung (12) befestigt und so konfiguriert ist, dass er die Buchse kontaktiert; einen Belastungsfestkörper (16) und ein Temperaturmesselement (19), um die Temperatur an der Verbindung zwischen dem Kabelkopf und der Buchse zu erfassen und das Signal der gemessenen Temperatur über eine drahtlose Übertragung an einen Kollektor (5) zu übertragen,
**dadurch gekennzeichnet, dass**
das Temperaturmesselement (19) in die Mutter (122) eingesetzt ist,
ein Gewindeeinsatz (17) zwischen der Bolzenanordnung (12) und der Steckerabdeckung (13) vorgesehen ist, um ein elektrisches Feld auszugleichen, und
der Gewindeeinsatz (17) in die Steckerabdeckung (13) eingesetzt ist und ein Abstand (S) zwischen einem Ende des Gewindeeinsatzes (17) und einem Ende der Steckerabdeckung (13) vorhanden ist, um die Ausgabe des Temperatursignals zu erreichen.

2. Kabelkopf nach Anspruch 1, **dadurch gekennzeichnet, dass** an einer Außenfläche der Mutter (122) eine Aussparung zur Aufnahme des Temperaturmesselements (19) vorgesehen ist.

3. Kabelkopf nach Anspruch 1, **dadurch gekennzeichnet, dass** die drahtlose Übertragung eine Hochfrequenz-Identifikation ist.

4. Kabelkopf nach Anspruch 1, **dadurch gekennzeichnet, dass** der Kabelkopf (1) ferner eine Abschirmung (18) aufweist, die mit dem Metallanschluss (14) in Kontakt steht, um ein elektrisches Feld abzuschirmen.

5. Kabelkopf nach Anspruch 1, **dadurch gekennzeichnet, dass** der Metallanschluss (14) ein Kupferanschluss ist.

6. Ringleitungseinheit, die den Kabelkopf nach einem der Ansprüche 1 bis 5 umfasst.

## Revendications

1. Tête de câble (1) pour une unité principale en anneau, comprenant un corps de fiche (11) ; un ensemble boulon (12) comprenant un boulon (121) et un écrou (122), dans lequel lorsque la tête de câble (1) est assemblée à une douille de l'unité principale en anneau, le boulon (121) est inséré dans la douille et la douille contient une partie du boulon (121) ; un couvercle de fiche (13) monté sur l'écrou (122) d'un côté; un capuchon de fiche (15) monté sur le couvercle de fiche de l'autre côté pour fermer le couvercle de fiche (13) ; une borne métallique (14) fixée avec l'ensemble boulon (12) et configurée pour entrer en contact avec la douille ; un solide de contrainte (16) et un élément de mesure de température (19) pour détecter la température à la connexion entre la tête de câble et la douille et transmettre le signal de température mesurée à un collecteur (5) par transmission sans fil, **caractérisée en ce que**
l'élément de mesure de température (19) est inséré dans l'écrou (122), un insert fileté (17) est prévu entre l'ensemble boulon (12) et le couvercle de fiche (13) pour égaliser le champ électrique, et
l'insert fileté (17) est inséré dans le couvercle de fiche (13) et il y a un espacement (S) entre une extrémité de l'insert fileté (17) et une extrémité du couvercle de fiche (13) pour réaliser la sortie du signal de température.

2. Tête de câble selon la revendication 1, **caractérisée en ce qu'**un évidement est prévu sur une surface extérieure de l'écrou (122) pour contenir l'élément de mesure de température (19).

3. Tête de câble selon la revendication 1, **caractérisée en ce que** la transmission sans fil est une identification par radiofréquence.

4. Tête de câble selon la revendication 1, **caractérisée en ce que** la tête de câble (1) comprend en outre un blindage (18) en contact avec la borne métallique (14) pour blinder le champ électrique.

5. Tête de câble selon la revendication 1, **caractérisée en ce que** la borne métallique (14) est une borne en cuivre.

6. Unité principale en anneau comprenant la tête de câble selon l'une quelconque des revendications 1 à 5.
